# EUROPÄISCHE PATENTSCHRIFT

(11) **EP 3 742 337 B1**
(45) Veröffentlichungstag und Bekanntmachung des Hinweises auf die Patenterteilung: **31.12.2025**
(21) Anmeldenummer: 20175488.4
(22) Anmeldetag: 19.05.2020
(51) Int. Cl.: G06V 10/10, G06V 10/75, G06V 20/20

(54) **VENTILERKENNUNGSSYSTEM**
VALVE DETECTION SYSTEM
SYSTÈME DE DÉTECTION DES VANNES

(30) Priorität: 20.05.2019 DE 102019003520
(43) Veröffentlichungstag der Anmeldung: 25.11.2020
(73) Patentinhaber: SISTO Armaturen S.A., 6468 Echternach (LU)
(72) Erfinder: Laschke, Andreas, 6468 Echternach (LU)
(74) Vertreter: Lorenz Seidler Gossel Part. mbB

(56) Entgegenhaltungen:
- WO-A1-2014/026787
- WO-A1-2018/193880
- US-A1- 2017 213 335
- US-A1- 2019 001 288
- US-A1- 2020 124 401

## Beschreibung

Die vorliegende Erfindung betrifft ein System zum Identifizieren von fluidführenden Ventilen mit einer mobilen Aufnahmevorrichtung, einer Datenbank, einem Analysemittel und einem Visualisierungsmittel.

Bei der Wartung oder Zustandsüberwachung von Anlagen oder deren Bauteilen kann es aus verschiedenen Gründen vorkommen, dass ein Bauteil beim Service-Einsatz vor Ort durch das Personal nicht oder nicht ohne Weiteres identifizierbar ist, beispielsweise bei Fehlen eines entsprechenden Typenschildes oder einer von außen sichtbaren Seriennummer. In einem solchen Fall muss häufig weiteres Personal hinzugezogen oder weitere Informationen eingeholt werden, was die Arbeiten erheblich verzögert.

Die WO 2018/193880 A1 offenbart ein Verfahren zur Identifikation fluidführender Bauteile über eine Analyse von Bilddaten betreffend an das Bauteil angeschlossene Rohre. Ein Verfahren zur Identifikation fluidführender Ventile ist ebenfalls aus der US 2017/213335 A1 bekannt. Die WO 2014/026787 A1 offenbart ein Verfahren zur Überwachung des Betriebszustands einer Turbinenanlage mittels eines elektronischen Mobilfunkgeräts. Aus der US 2019/001288 A1 ist es bekannt, ein Bild eines zu identifizierenden Mixers aufzunehmen und mittels Bildanalyse und eines Datenbankabgleichs eine Identifikation durchzuführen.

Der vorliegenden Erfindung liegt daher die Aufgabe zugrunde, ein Bauteilerkennungssystem bereitzustellen, welches eine schnelle Identifizierung unbekannter Ventile vor Ort ermöglicht.

Erfindungsgemäß wird diese Aufgabe durch ein System zum Identifizieren von fluidführenden Ventilen mit den Merkmalen des Anspruchs 1 gelöst.

Demnach umfasst das erfindungsgemäße System das Folgende:
- Eine mobile Aufnahmevorrichtung mit einer Eingabeeinheit, einer Anzeigeeinheit und einer Kamera, wobei mittels der Kamera Bilddaten des zu identifizierenden Ventils erfassbar sind. Bei den Bilddaten handelt es sich insbesondere um ein zweidimensionales Bild bzw. Foto des Ventils.
- Eine Datenbank, in welcher Bauteildaten für eine Vielzahl von insbesondere fluidführenden Ventilen hinterlegt bzw. gespeichert sind. Die Bauteildaten umfassen Informationen zu dem jeweiligen Bauteiltyp, also eine Angabe, um welches Ventil es sich handelt, sowie Vergleichsdaten, welche das entsprechende Ventil charakterisieren und somit einen Vergleich mit dem zu identifizierenden Ventil anhand der erfassten Bilddaten ermöglichen. Vorzugsweise umfassen die Bauteildaten noch weitere Informationen.
- Ein Analysemittel, welches einen Zugriff auf die Datenbank aufweist und dazu ausgelegt ist, die erfassten Bilddaten von der Aufnahmevorrichtung zu erhalten und einen Vergleich der Bilddaten des zu identifizierenden Ventils mit Vergleichsdaten der Datenbank durchzuführen, um dem zu identifizierenden Ventil einen in der Datenbank hinterlegten Bauteiltyp zuzuordnen und dadurch das unbekannte Ventil eindeutig zu identifizieren.
- Ein Visualisierungsmittel, welches mit der Anzeigeeinheit in Verbindung steht und dazu ausgelegt ist, Daten von dem Analysemittel zu erhalten und bei einer erfolgreichen eindeutigen Identifikation des unbekannten Ventils die entsprechenden Bauteildaten oder einen Teil der Bauteildaten auf der Anzeigeeinheit anzuzeigen. Das Visualisierungsmittel ist ferner dazu ausgelegt, bei einer fehlgeschlagenen eindeutigen Identifikation des unbekannten Ventils eine Eingabeaufforderung auf der Anzeigeeinheit anzuzeigen, insbesondere graphisch anzuzeigen.

Erfindungsgemäß sind im Falle einer Anzeige der Eingabeaufforderung, welche aufgrund einer fehlgeschlagenen eindeutigen Identifikation des unbekannten Ventils erfolgt, Eingabedaten mittels der Eingabeeinheit durch den Bediener eingebbar und/oder es sind zusätzliche Bilddaten des zu identifizierenden Ventils mittels der Kamera erfassbar. Bei den Eingabedaten kann es sich beispielsweise um die Auswahl, also z.B. ein Anklicken, eines auf der Anzeigeeinheit graphisch dargestellten Symbols oder Bildes und/oder um die Eingabe von Informationen handeln.

Erfindungsgemäß ist das Analysemittel dazu ausgelegt, auf Grundlage der in Reaktion auf die Eingabeaufforderung eingegebenen Eingabedaten dem zu identifizierenden Ventil Bauteildaten der Datenbank zuzuordnen, es also dadurch direkt auf Grundlage der Eingabedaten zu identifizieren, und/oder auf Grundlage der zusätzlich erfassten Bilddaten einen weiteren Vergleich mit Vergleichsdaten der Datenbank durchzuführen, um dem zu identifizierenden Ventil Bauteildaten der Datenbank zuzuordnen und es dadurch eindeutig zu identifizieren.

Mit der mobilen Aufnahmevorrichtung kann das Servicepersonal direkt vor Ort Bilddaten des unbekannten Ventils , insbesondere ein Foto, aufnehmen und es im Anschluss durch das Analysemittel automatisch analysieren lassen. Die Bilddaten werden direkt mit den Vergleichsdaten der Datenbank verglichen und ein entsprechendes Ergebnis über die Anzeigeeinheit der Aufnahmevorrichtung automatisch ausgegeben. Entweder kann aufgrund des Vergleichs das unbekannte Ventil aufgrund der Analyse direkt identifiziert werden, oder es erfolgt automatisch eine Aufforderung zur Vornahme weiterer Schritte mittels der mobilen Aufnahmevorrichtung.

Dadurch kann eine Identifizierung des unbekannten Ventils direkt am Einsatzort erfolgen und eine entsprechende Maßnahme, beispielsweise ein direkter Austausch des Ventils oder einer Komponente, ein Einsatz passender Werkzeuge oder Materialien oder eine Anforderung / Bestellung entsprechender Ersatzteile unmittelbar ergriffen werden. Dem Bediener werden nach erfolgreicher Identifizierung direkt die entsprechenden Informationen über das Ventil auf der Anzeigeeinheit angezeigt, beispielsweise den konkreten Bauteiltyp, verfügbare Ersatzteile und Angaben zur Montage. Eine Verwechslungsgefahr mit anderen, ähnlichen Ventilen wird durch das erfindungsgemäße System minimiert.

Mittels des erfindungsgemäßen Systems kann z.B. ein Ventil als Ganzes analysiert und identifiziert werden, oder es kann eine Analyse und Identifikation einer Komponente eines Ventils, beispielsweise eines Handrads, Oberteils oder Körpers des Ventils, vorgenommen werden. Entsprechende Bauteildaten zu den Geräten, Ventilen und/oder Einzelkomponenten sind in der Datenbank hinterlegt.

Vorteilhafte Ausführungsformen der Erfindung ergeben sich aus den Unteransprüchen und der nachfolgenden Beschreibung.

In einer Ausführungsform ist vorgesehen, dass die weiteren Informationen der Bauteildaten Informationen über den Hersteller, Informationen über Einzelkomponenten der Ventile bzw. Stücklisten, Informationen über verfügbare Ersatzteile, Angaben zur Montage / Anordnung / Kompatibilität mit anderen Ventilen, Angaben zu früheren Wartungen und/oder Zustandsüberprüfungen, Angaben zu früheren Montagen und/oder weitere Herstellerangaben umfassen. Dadurch stehen dem Servicepersonal vor Ort direkt alle notwendigen Informationen zur Verfügung, was einen schnellen und reibungslosen Serviceeinsatz ermöglicht.

In einer weiteren Ausführungsform ist vorgesehen, dass die Vergleichsdaten die typische Gesamtform der hinterlegten Ventile, die Form und/oder Anordnung einer oder mehrerer Einzelkomponenten der hinterlegten Ventile und/oder ein oder mehrere Einzelmerkmale der hinterlegten Ventile charakterisieren. Hierbei werden insbesondere auch die Abmessungen der Ventile berücksichtigt. Bei dem Vergleich kann es sich um einen Musterabgleich handeln. Hierbei können Methoden der Bildverarbeitung zum Einsatz kommen.

In einer weiteren Ausführungsform ist vorgesehen, dass die Vergleichsdaten, falls bei dem betreffenden Ventil vorgesehen, Typenschildinformationen, Bauteilnummern, Seriennummern und/oder sonstige, außen sichtbar an den Ventilen angebrachte Informationen umfassen oder betreffen, über welche eine eindeutige Referenz zu dem betreffenden Ventil herstellbar ist. Die entsprechenden Buchstaben, Zahlen und/oder Symbole können aus den erfassten Bilddaten mittels bildverarbeitender Methoden automatisch extrahierbar sein.

In einer weiteren Ausführungsform ist vorgesehen, dass die Eingabeaufforderung eine insbesondere graphische Anzeige mehrerer in Frage kommender, in der Datenbank hinterlegter Ventile und/oder der entsprechenden Bauteildaten dieser in Frage kommenden Ventile umfasst. Mittels der Eingabeeinheit ist eines dieser angezeigten Ventile durch den Bediener auswählbar und dadurch die dem ausgewählten Ventil zugeordneten Bauteildaten der Datenbank dem zu identifizierenden Ventil direkt durch den Bediener zuordenbar. Diese Art der Eingabeaufforderung und anschließenden direkten Auswahl einer der angezeigten Optionen kommt vor allem dann in Frage, wenn ein Vergleich der erfassten Bilddaten mit den gespeicherten Vergleichsdaten kein eindeutiges Resultat ergibt, wenn also mehrere der in der Datenbank hinterlegte Ventile in Frage kommen. In diesem Fall trifft die Analyse also eine Vorauswahl, wobei der Bediener anschließend die Endauswahl, d.h. Identifikation, trifft.

In einer weiteren Ausführungsform ist vorgesehen, dass in Reaktion auf die Eingabeaufforderung weitere Bilddaten des zu identifizierenden Ventils mittels der Kamera aufnehmbar sind, wobei der daraufhin von dem Analysemittel durchgeführte weitere Vergleich mit Vergleichsdaten der Datenbank diese zusätzlich erfassten Bilddaten berücksichtigt. Ist durch den Vergleich mit den Vergleichsdaten der Datenbank also keines der hinterlegten Ventile als eindeutig in Frage kommend bewertet worden, wird der Bediener mittels der Eingabeaufforderung aufgefordert, weitere Aufnahmen des zu identifizierenden Ventils mittels der Kamera aufzunehmen und dem Analysemittel für eine verbesserte bzw. verfeinerte Analyse zur Verfügung zu stellen.

Insbesondere können weitere Aufnahmen des Ventils aus unterschiedlichen Perspektiven bzw. Blickrichtungen aufgenommen werden, welche eine bessere Identifizierung ermöglichen. Alternativ oder zusätzlich kann eine Aufforderung zur genaueren bzw. spezifischeren Erfassung bestimmter Komponenten des zu identifizierenden Ventils vorgesehen sein. Beispielsweise kann der Bediener aufgefordert werden, Fotos von einzelnen Komponenten aufzunehmen und/oder das zu identifizierende Ventil aus mehreren Perspektiven zu fotografieren. Dadurch wird die Zahl in Frage kommender in der Datenbank hinterlegter Ventile weiter eingegrenzt oder eine Identifizierung erst ermöglicht.

Erfindungsgemäß ist vorgesehen, dass bei oder nach der Erfassung von Bilddaten des zu identifizierenden Ventils die von der Kamera erfassten Bilddaten, insbesondere ein 2D-Bild bzw. Foto, auf der Anzeigeeinheit graphisch darstellbar und ein oder mehrere charakteristische Punkte und/oder Bereiche der angezeigten Bilddaten über die Eingabeeinheit definierbar, benennbar und/oder auswählbar sind. Der Bediener kann also manuell einen oder mehrere "Ankerpunkte" bzw. charakteristische Punkte oder Bereiche festlegen, welche eine verfeinerte Analyse bzw. einen verbesserten Vergleich mit den Vergleichsdaten der Datenbank ermöglichen. Das Analysemittel ist entsprechend dazu ausgelegt, diese durch den Bediener eingegebenen Eingabedaten zu erhalten und bei dem Vergleich der erfassten Bilddaten mit Vergleichsdaten der Datenbank zu berücksichtigen. Bei den Ankerpunkten bzw. charakteristischen Bereichen handelt es sich um eine mittlere Achse des Ventils und/oder eine manuelle Benennung eines Handrads, Antriebs oder Flansche des Ventils durch den Bediener.

In einer weiteren Ausführungsform ist ein Bildverarbeitungsmittel vorgesehen, welches dazu ausgelegt ist, die erfassten Bilddaten von der Aufnahmevorrichtung zu erhalten und anhand der Merkmale der Bilddaten mindestens einen bauteilbezogenen Messwert automatisch zu bestimmen. Bei dem extrahierten Messwert kann es sich um eine Nennweite, eine Flanschnorm oder eine sonstige Abmessung / Dimension / Maß des zu identifizierenden Ventils handeln. Das Analysemittel ist entsprechend dazu ausgelegt, diesen mindestens einen Messwert zu erhalten und bei dem Vergleich der erfassten Bilddaten mit Vergleichsdaten der Datenbank zu berücksichtigen. Hierbei können unterschiedliche Methoden der Bildverarbeitung wie Feature-Extraktion, Kanten- bzw. Eckendetektion, Segmentierung und/oder Template-Matching zum Einsatz kommen, um die entsprechenden Messwerte automatisch aus den erfassten Bilddaten zu bestimmen.

In einer weiteren Ausführungsform ist vorgesehen, dass die Aufnahmevorrichtung mindestens einen Sensor, insbesondere Vibrations- bzw. Druck-, Magnet- und/oder Temperatursensor, aufweist, mittels welchem mindestens ein Betriebsparameter bzw. eine Eigenschaft des zu identifizierenden Ventils oder einer der Einzelkomponenten des Ventils erfassbar ist, wobei das Visualisierungsmittel dazu ausgelegt ist, Informationen betreffend den mindestens einen erfassten Betriebsparameter / Eigenschaft auf der Anzeigeeinheit anzuzeigen und wobei der mindestens eine erfasste Betriebsparameter / Eigenschaft vorzugsweise in der Datenbank und/oder einer mit der Aufnahmevorrichtung verbundenen Speichereinheit speicherbar ist.

Bei dem Betriebsparameter / Eigenschaft kann es sich z.B. um eine Materialeigenschaft, eine Restlebensdauer oder eine Temperatur handeln. Beispielsweise kann mittels eines Drucksensors die Restlebensdauer einer Membran ermittelbar sein. Dies kann bei der Entscheidung helfen, ob das entsprechende Ventil bzw. eine entsprechende Komponente direkt ausgetauscht werden muss, oder für einen bestimmten Zeitpunkt ein Servicetermin bestimmt werden muss. Auch können die zusätzlichen Messungen bei der Bestimmung bestimmter Eigenschaften wie beispielsweise das Material des Ventils bzw. einer der Komponenten helfen. Ferner kann die mobile Aufnahmevorrichtung einen GPS-Sensor umfassen.

Bei der mobilen Aufnahmevorrichtung kann es sich um ein Smartphone handeln. In diesem Fall können die zusätzlichen Sensoren durch die integrierten Sensoren des Smartphones bereitgestellt werden, z.B. durch ein Mikrofon, Gyroskop, GPS-Sensor, Magnetfeldsensor, Helligkeitssensor, Voltmeter (z.B. durch die Nutzung des Kopfhöreranschlusses), Thermometer und/oder Barometer.

In einer weiteren Ausführungsform ist das Visualisierungsmittel dazu ausgelegt, bei einer erfolgreichen eindeutigen Identifikation des Ventils mindestens ein Ersatzteil dieses Ventils und/oder der Einzelkomponenten dieses Ventils auf der Anzeigeeinheit anzuzeigen. Beispielsweise kann eine Ersatzteilliste für die Komponenten des identifizierten Ventils anzeigbar sein. Mittels der Eingabeeinheit ist das gewünschte Ersatzteil sowie eine Stückzahl auswählbar, wobei das System dazu ausgelegt ist, Daten betreffend das ausgewählte Ersatzteil und die Stückzahl an einen externen Rechner, insbesondere eine Anbieterdatenbank oder Einsatzzentrale, zu übermitteln.

Nach erfolgreicher Identifikation hat der Bediener also die Möglichkeit, direkt ein gewünschtes Ersatzteil, entweder für eine der Komponenten oder für das gesamte identifizierte Ventil , auszuwählen und zu bestellen - entweder bei einem externen Anbieter oder in der eigenen Einsatz- bzw. Servicezentrale. Hierfür können die Daten bzw. die Bestellung entweder an eine Einsatzzentrale oder direkt an den entsprechenden Anbieter übermittelt werden. Alternativ oder zusätzlich kann das System eingerichtet sein, einen Bestelltext und/oder Hersteller-Kontaktdaten auf der Anzeigeeinheit anzuzeigen. Ferner ist es möglich, dass der Bediener die Ersatzteile nicht direkt auswählt, sondern zunächst mit einer Bestellplattform des entsprechenden Anbieters verbunden bzw. zu dieser geleitet wird und dort die entsprechende Auswahl und Bestellung vornimmt.

In einer weiteren Ausführungsform ist das System dazu ausgelegt, falls eine eindeutige Identifikation des Ventils auch bei einem erneuten Vergleich mit Vergleichsdaten der Datenbank - unter Berücksichtigung der in Reaktion auf die Eingabeaufforderung eingegebenen Eingabedaten und/oder der zusätzlich erfassten Bilddaten - fehlschlägt, die Eingabedaten und/oder erfassten Bilddaten an einen externen Rechner zu übermitteln und daraufhin Identifikationsinformationen betreffend das zu identifizierende Ventil von dem externen Rechner zu empfangen. Hierzu kann das System dazu ausgelegt sein, im Falle einer auf Grundlage der Identifikationsinformationen erfolgreichen eindeutigen Identifikation des unbekannten Ventils die Bilddaten und/oder Eingabedaten und/oder Identifikationsinformationen vollständig oder teilweise in der Datenbank zu speichern.

Bei den Identifikationsinformationen kann es sich beispielsweise um Informationen handeln, welche von weiterem, nicht am Einsatzort anwesendem Personal an die die mobile Aufnahmevorrichtung bedienende Person übermittelt wird. Ist also ein Vergleich mit den in der Datenbank hinterlegten Vergleichsdaten selbst nach der Reaktion auf die Eingabeaufforderung erfolglos, können die erfassten Bilddaten und/oder weitere Eingaben bzw. Eingabedaten an eine Einsatzzentrale und/oder weitere Personen gesendet werden, welche daraufhin eine Einschätzung bzw. Rückmeldung betreffend das zu identifizierende Ventil übermitteln können. Hierzu kann vorgesehen sein, dass ebenfalls in Frage kommende Vergleichsdaten bzw. Vergleichsmuster an den externen Rechner übermittelt werden, welche bei der externen Einschätzung behilflich sein könnten.

Ferner kann vorgesehen sein, dass bei einer aufgrund der Rückmeldung bzw. Einschätzung erfolgreichen Identifikation entsprechende Informationen und/oder neue Vergleichsdaten, welche einen zukünftigen Vergleich bzw. eine zukünftige Identifikation erleichtern, in der Datenbank abgelegt werden können. Dadurch wird die Datenbank sukzessive um zusätzliches Wissen angereichert und die Mustererkennung bzw. der Vergleich mit den Vergleichsdaten der Datenbank verbessert. Die Identifikation aufgrund der externen Einschätzung ist vorzugsweise als erfolgreich anzusehen, wenn die Rückmeldungen von mindestens zwei unterschiedlichen Instanzen bzw. Personen ein identisches Ergebnis ergeben, wenn also dem unbekannten Ventil zweimal das gleiche Ventil zugeordnet wird.

Die Datenbank kann lokal auf der mobilen Aufnahmevorrichtung hinterlegt sein, oder es kann sich um eine zentrale Datenbank handeln, auf die die unterschiedlichen Mittel bzw. Anwendungen über entsprechende Verbindungen, beispielsweise drahtlos, zugreifen können. Bei der Datenbank kann es sich insbesondere um eine cloudbasierte Datenbank bzw. Cloud handeln.

Bei der mobilen Aufnahmevorrichtung kann es sich um ein Mobiltelefon, insbesondere ein Smartphone, mit integrierter Kamera handeln, wobei die Anzeigeeinheit und die Eingabeeinheit vorzugsweise durch ein Touch-Display gebildet werden. Das Visualisierungsmittel und/oder das Analysemittel und/oder das Bildverarbeitungsmittel können Bestandteil einer Smartphone-App sein, welche die entsprechenden Analysen durchführt und dem Bediener die Identifikation eines unbekannten Ventils ermöglicht. Über das Handynetz und/oder WLAN kann ein Zugriff auf die Datenbank erfolgen, um die mittels des Smartphones aufgenommenen Bilddaten des Ventils mit den Bauteildaten der Datenbank zu vergleichen. Alternativ kann die Datenbank direkt auf dem Smartphone hinterlegt sein. Der Vergleich bzw. die Analyse des Analysemittels kann auch auf einem externen Rechner erfolgen, wobei die auf der Anzeigeeinheit anzuzeigenden Informationen an das Smartphone übermittelt werden. Das Analysemittel kann auch Bestandteil der Smartphone-App sein, sodass der Vergleich bzw. die Analyse direkt auf dem Smartphone erfolgt.

Alternativ zu einer Bedienung der mobilen Aufnahmevorrichtung durch einen menschlichen Bediener kann auch vorgesehen sein, dass eine automatisierte Erfassung der Bilddaten des unbekannten Ventils und/oder, nach erfolgter Eingabeaufforderung, eine automatisierte Eingabe der Eingabedaten und/oder eine automatisierte Erfassung zusätzlicher Bilddaten erfolgt, dass also bei einem oder mehreren der vorgenannten Schritte oder bei allen dieser Schritte kein menschlicher Bediener involviert ist. So kann vorgesehen sein, dass die Bedienung der mobilen Aufnahmevorrichtung automatisch, beispielsweise durch eine Maschine wie einen Roboter oder eine Drohne, etc., erfolgt. Insbesondere ist es möglich, dass die mobile Aufnahmevorrichtung selbst als Maschine, beispielsweise als automatisiertes Bildgebungssystem, Roboter, Drohne, etc., ausgebildet ist.

Die vorliegende Erfindung betrifft weiterhin ein Verfahren zur Identifikation von fluidführenden Ventilen mittels des erfindungsgemäßen Systems. Das erfindungsgemäße Verfahren umfasst die folgenden Schritte:
- Erfassen von Bilddaten des zu identifizierenden Ventils mittels der Aufnahmevorrichtung;
- Vergleichen der erfassten Bilddaten mit Vergleichsdaten der Datenbank mittels des Analysemittels, um dem zu identifizierenden Ventil Bauteildaten der Datenbank zuzuordnen;
- im Falle einer erfolgreichen eindeutigen Identifikation des Ventils , Anzeigen der dem zu identifizierenden Ventil zugeordneten Bauteildaten oder eines Teils davon auf der Anzeigeeinheit mittels des Visualisierungsmittels;
- im Falle einer fehlgeschlagenen eindeutigen Identifikation des Ventils , Anzeigen einer Eingabeaufforderung auf der Anzeigeeinheit mittels des Visualisierungsmittels;
- in Reaktion auf die Eingabeaufforderung, Eingeben von Eingabedaten mittels der Eingabeeinheit und/oder Erfassen zusätzlicher Bilddaten mittels der Aufnahmevorrichtung; und
- in Reaktion auf die Eingabe der Eingabedaten und/oder die Erfassung zusätzlicher Bilddaten, Zuordnen von Bauteildaten der Datenbank zu dem zu identifizierenden Ventil auf Grundlage der Eingabedaten und/oder Durchführen eines weiteren Vergleichs mit Vergleichsdaten der Datenbank auf Grundlage der zusätzlichen Bilddaten, um dem zu identifizierenden Ventil Bauteildaten der Datenbank zuzuordnen.

Erfindungsgemäß ist vorgesehen, dass bei oder nach dem Erfassen von Bilddaten die von der Kamera erfassten Bilddaten auf der Anzeigeeinheit dargestellt und ein oder mehrere charakteristische Punkte und/oder Bereiche der angezeigten Bilddaten über die Eingabeeinheit definiert, benannt und/oder ausgewählt werden, wobei das Analysemittel diese Eingabedaten bei dem Vergleich der erfassten Bilddaten mit Vergleichsdaten der Datenbank berücksichtigt.

Bei den charakteristischen Punkten und/oder Bereichen handelt es sich um eine mittlere Achse des Ventils und/oder eine manuelle Benennung eines Handrads, Antriebs oder Flansches des Ventils durch den Bediener.

In einer weiteren Ausführungsform des Verfahrens ist vorgesehen, dass die erfassten Bilddaten von einem Bildverarbeitungsmittel verarbeitet werden, wobei anhand der Merkmale der Bilddaten mindestens ein bauteilbezogener Messwert, bei dem es sich insbesondere um eine Nennweite, eine Flanschnorm oder eine sonstige Abmessung des zu identifizierenden Ventils handelt, automatisch bestimmt wird, wobei das Analysemittel diesen mindestens einen Messwert bei dem Vergleich der erfassten Bilddaten mit Vergleichsdaten der Datenbank berücksichtigt.

Durch das erfindungsgemäße Verfahren ergeben sich dieselben Vorteile und Eigenschaften wie für das erfindungsgemäße System, weshalb an dieser Stelle auf eine weitergehende wiederholende Beschreibung verzichtet wird. Die zuvor beschriebenen Ausführungsformen des erfindungsgemäßen Systems gelten für das erfindungsgemäße Verfahren, welches sich des erfindungsgemäßen Systems bedient, entsprechend.

Weitere Merkmale, Einzelheiten und Vorteile der Erfindung ergeben sich aus dem nachfolgend anhand der einzigen Figur erläuterten Ausführungsbeispiel.

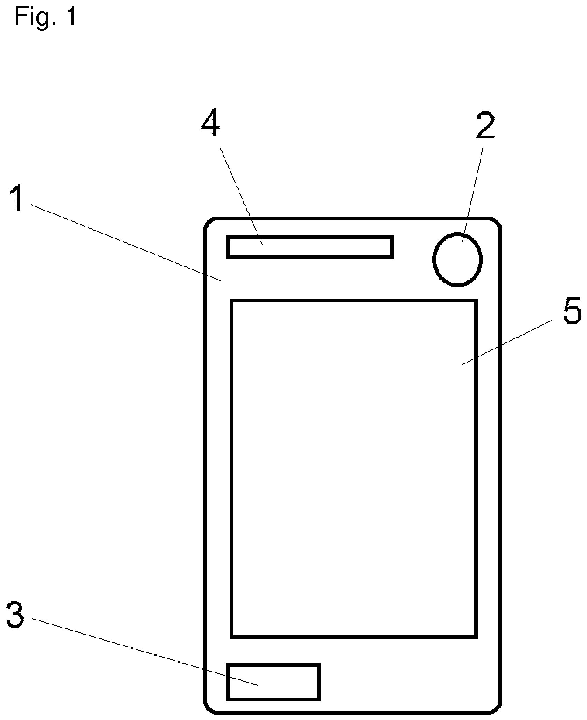

In der Figur 1 ist die Aufnahmevorrichtung 1 gemäß einem Ausführungsbeispiel des erfindungsgemäßen Systems schematisch dargestellt. Bei der Aufnahmevorrichtung 1 handelt es sich um ein Smartphone mit einer Kamera 2, einem als Touch-Display ausgestalteten Anzeigeelement 5, welches gleichzeitig als Eingabeelement 5 fungiert, einem Mikrofon 3 und einem weiteren Sensor 4. Bei dem zu identifizierenden Bauteil handelt es sich um ein Ventil.

Mittels der Kamera 2 des Smartphones 1 wird ein Foto des Ventils aufgenommen und mittels einer speziellen App analysiert. Die App hat Zugriff auf eine Datenbank, welche entweder auf dem Smartphone 1 oder einem externen Rechner abgelegt ist. Im Falle einer cloudbasierten Datenbank erfolgt der Zugriff bzw. die Datenübertragung insbesondere drahtlos, beispielsweise über das Handynetz (z.B. GSM, UMTS, LTE oder 5G) oder WLAN. Die App kann als Smartphone-App direkt auf der mobilen Aufnahmevorrichtung 1 oder aber auf dem externen Rechner laufen, um die Analyse der aufgenommenen Bilddaten des Ventils durchzuführen. In letzterem Fall werden die Ergebnisse dieser Analyse wieder an die mobile Aufnahmevorrichtung 1 übermittelt und dort entsprechend auf dem Display 5 zur Anzeige gebracht.

In der Datenbank sind für eine Vielzahl von Ventiltypen Bauteildaten hinterlegt. Diese Bauteildaten umfassen den konkreten Bauteiltyp, Stücklisten bzw. Ersatzteillisten und optional weitere Informationen wie Montagehinweise oder Baureihenhefte. Zudem umfasst jeder Bauteildatensatz Vergleichsdaten, welche das jeweilige hinterlegte Ventil eindeutig charakterisieren, beispielsweise über die typische Gesamtform oder die Form einzelner Komponenten. Ist ein Typenschild vorhanden, wird anhand der Informationen aus dem Typenschild die Referenz zu dem entsprechenden Ventil hergestellt.

Das Foto des unbekannten Ventils wird der App zur Verfügung gestellt, welche unter Zugriff auf die Datenbank einen Vergleich der durch das Foto repräsentierten Bilddaten mit den gespeicherten Vergleichsdaten vornimmt, um dem unbekannten Ventil eines der in der Datenbank hinterlegten Ventile zuzuordnen und ersteres somit zu identifizieren.

Zum schnelleren Musterabgleich bzw. Vergleich mit den hinterlegten Vergleichsdaten werden nach dem Fotografieren einige charakteristische Punkte bzw. "Ankerpunkte" vom Bediener des Smartphones 1 abgefragt, z.B. die Bestimmung der mittleren Achse des Ventils, die Benennung einzelner Komponenten (z.B. Handrad oder Antrieb des Ventils) oder die Benennung einzelner Bereiche (z.B. Flansche). Alternativ oder zusätzlich kann vorgesehen sein, dass mittels bildverarbeitender Methoden eine automatische Vermessung der Dimensionen bzw. Maße des fotografierten Ventils vorgenommen wird, beispielsweise um die Nennweite und/oder Flanschnorm zu ermitteln. Diese Daten helfen bei der Analyse für die Identifikation.

Kann aufgrund des Fotos des unbekannten Ventils und ggf. der zusätzlich eingegebenen Eingabedaten eines der in der Datenbank hinterlegten Ventile eindeutig zugeordnet werden, werden dem Bediener sämtliche verfügbaren Informationen zu dem identifizierten Ventil generiert und auf dem Display 5 des Smartphones 1 angezeigt. Falls hinterlegt, erfolgt z.B. eine Stücklistenauflösung und der Bediener (z.B. ein Servicetechniker) erhält eine Liste aller möglichen Ersatzteile für das identifizierte Ventil. Der Servicetechniker erhält mittels des erfindungsgemäßen Systems sofort die notwendigen Informationen zur Baureihe und eventuell zur speziellen Anordnung vor Ort.

Aus dieser Liste kann er anschließend das benötigte Ersatzteil auswählen und bestellen. Hierzu kann der Bediener wahlweise einen Bestelltext oder Hersteller-Kontaktdaten abrufen oder er wird zu einer Bestellplattform für das entsprechende Ersatzteil geleitet. Alternativ oder zusätzlich kann vorgesehen sein, dass eine Bestellung bei einem externen Anbieter und/oder eine Anforderung eines auf Lager gehaltenen Ersatzteils in einer eigenen Einsatzzentrale direkt über die App erfolgen kann.

Falls eine Identifikation des Ventils auf Grundlage des aufgenommenen Fotos und ggf. der zusätzlichen Angaben über den Vergleich mit den Vergleichsdaten nicht möglich ist, existieren mehrere Möglichkeiten.

Falls die Analyse der App zu mehreren Kandidaten für passende Ventile, also zu einer uneindeutigen Identifikation führt, können dem Bediener auf dem Display 5 des Smartphones 1 die durch die Analyse gefundenen, möglicherweise passenden Ventile der Datenbank angezeigt werden (insbesondere als graphische Abbildungen), woraufhin der Bediener manuell eines der angezeigten Ventile auswählen und dadurch die eindeutige Identifikation durchführen kann. Es kann vorgesehen sein, dass Informationen, die diese manuelle Identifikation betreffen, in der Datenbank gespeichert werden können, um den Datenbestand kontinuierlich auf Grundlage der menschlichen Eingaben zu aktualisieren und zukünftige Analysen zu verbessern.

Falls nach der Analyse keines der in der Datenbank hinterlegten Ventile in Frage kommt oder keine vernünftige Eingrenzung möglich ist, kann der Bediener aufgefordert werden, zusätzliche Informationen bereitzustellen, die eine Identifikation bzw. weitere Eingrenzung erlauben. Hierzu kann entweder eine Eingabe weiterer Ankerpunkte, charakteristischer Bereiche, Benennungen, etc. bezüglich des ursprünglich aufgenommenen Fotos des unbekannten Ventils abgefragt werden, oder der Bediener wird aufgefordert, weitere Fotos des unbekannten Ventils aus verschiedenen Blickrichtungen und/oder Fotos von einzelnen Komponenten des Ventils aufzunehmen. Diese zusätzlichen Bilddaten werden der App zur Verfügung gestellt, welche einen weiteren Vergleich mit den in der Datenbank hinterlegten Vergleichsdaten durchführt.

Falls nach diesem weiteren Versuch immer noch keine eindeutige Identifikation möglich ist, wird ein Workflow gestartet, der die durch den Bediener aufgenommenen Fotos und/oder zusätzlich eingegebene Eingabedaten sowie ggf. entsprechende Vergleichsmuster an mindestens zwei Experten übermittelt und deren Einschätzung abfragt. Bei zwei identischen Rückmeldungen, also falls in beiden Fällen dem unbekannten Ventil das gleiche in der Datenbank hinterlegte Ventil zugeordnet wird, werden die entsprechenden Identifikationsinformationen der Experten und evtl. entsprechende neue Vergleichsmuster in die Datenbank aufgenommen. Sind die Rückmeldungen dagegen nicht identisch und dadurch immer noch keine eindeutige Identifikation möglich, wird der Vorgang fortgesetzt und beispielsweise weitere Experten herangezogen. Damit wird die Datenbank sukzessive um zusätzliches Wissen angereichert und die Mustererkennung bzw. Analyse verbessert.

Zusätzlich lassen sich noch weitere Informationen zum Zustand des Ventils mit dem Mikrofon 3 oder weiteren Sensoren 4 des Smartphones 1 (z.B. Vibration, Temperatur, GPS, etc.) nutzen, um beispielsweise die Restlebensdauer von Komponenten des Ventils wie beispielsweise einer Membran abzuschätzen und ggf. einen automatischen Servicetermin mit einer Stückliste für benötigte Ersatzteile festzulegen.

Das erfindungsgemäße System ermöglicht vorzugsweise nicht nur die Identifizierung des ganzen Ventil , sondern auch einzelner Komponenten des Ventil . Entsprechende Daten für eine Vielzahl derartiger Komponenten sind vorzugsweise ebenfalls in der Datenbank hinterlegt.

### Bezugszeichenliste:

- 1: Aufnahmevorrichtung
- 2: Kamera
- 3: Mikrofon
- 4: Sensor
- 5: Anzeigeeinheit / Eingabeeinheit

## Patentansprüche

1. System zur Identifikation von fluidführenden Ventilen, umfassend
eine mobile Aufnahmevorrichtung (1) mit einer Eingabeeinheit (5), einer Anzeigeeinheit (5) und einer Kamera (2), wobei mittels der Kamera (2) Bilddaten des zu identifizierenden Ventils erfassbar sind,
eine Datenbank, in welcher Bauteildaten für eine Vielzahl von fluidführenden Ventilen hinterlegt sind, wobei die Bauteildaten Informationen zu dem jeweiligen Bauteiltyp, das jeweilige Ventil charakterisierende Vergleichsdaten sowie vorzugsweise weitere Informationen umfassen,
ein Analysemittel, welches einen Zugriff auf die Datenbank aufweist und dazu ausgelegt ist, die erfassten Bilddaten von der Aufnahmevorrichtung (1) zu erhalten und einen Vergleich der Bilddaten des zu identifizierenden Ventils mit Vergleichsdaten der Datenbank durchzuführen, um dem zu identifizierenden Ventil einen in der Datenbank hinterlegten Bauteiltyp zuzuordnen und dadurch das unbekannte Ventil eindeutig zu identifizieren, und
ein Visualisierungsmittel, welches mit der Anzeigeeinheit (5) in Verbindung steht und dazu ausgelegt ist, Daten von dem Analysemittel zu erhalten und bei einer erfolgreichen eindeutigen Identifikation des Ventils die entsprechenden Bauteildaten oder einen Teil davon auf der Anzeigeeinheit (5) anzuzeigen, wobei das Visualisierungsmittel ferner dazu ausgelegt ist, bei einer fehlgeschlagenen eindeutigen Identifikation des Ventils eine Eingabeaufforderung auf der Anzeigeeinheit (5) anzuzeigen,
wobei im Falle einer Anzeige der Eingabeaufforderung Eingabedaten mittels der Eingabeeinheit (5) eingebbar und/oder zusätzliche Bilddaten des zu identifizierenden Ventils mittels der Kamera (2) erfassbar sind,
wobei das Analysemittel dazu ausgelegt ist, auf Grundlage dieser Eingabedaten dem zu identifizierenden Ventil Bauteildaten der Datenbank zuzuordnen und/oder auf Grundlage dieser zusätzlichen Bilddaten einen weiteren Vergleich mit Vergleichsdaten der Datenbank durchzuführen, um dem zu identifizierenden Ventil Bauteildaten der Datenbank zuzuordnen und
bei oder nach der Erfassung von Bilddaten des zu identifizierenden Ventils die von der Kamera erfassten Bilddaten auf der Anzeigeeinheit (5) graphisch darstellbar und ein oder mehrere charakteristische Punkte und/oder Bereiche der angezeigten Bilddaten des zu identifizierenden Ventils über die Eingabeeinheit (5) definierbar, benennbar und/oder auswählbar sind, wobei das Analysemittel dazu ausgelegt ist, diese Eingabedaten zu erhalten und bei dem Vergleich der erfassten Bilddaten mit Vergleichsdaten der Datenbank zu berücksichtigen,
**dadurch gekennzeichnet, dass** es sich bei den charakteristischen Punkten und/oder Bereichen um eine mittlere Achse des Ventils und/oder eine manuelle Benennung eines Handrads, Antriebs oder Flansches des Ventils durch den Bediener handelt.

2. System nach Anspruch 1, **dadurch gekennzeichnet, dass** die weiteren Informationen der Bauteildaten Informationen über Einzelteile der Ventils, Stücklisten, Herstellerangaben, Informationen zur Kompatibilität mit anderen Bauteilen und/oder Angaben zu früheren Montagen umfassen.

3. System nach Anspruch 1 oder 2, **dadurch gekennzeichnet, dass** die Vergleichsdaten die typische Gesamtform der Ventils, die Form und/oder Anordnung einer oder mehrerer einzelner Komponenten der Ventils und/oder ein oder mehrere Einzelmerkmale der Ventils charakterisieren.

4. System nach einem der vorhergehenden Ansprüche, **dadurch gekennzeichnet, dass** die Vergleichsdaten Typenschildinformationen, Bauteilnummern, Seriennummern oder sonstige, außen sichtbar an den Ventilen angebrachte Informationen umfassen.

5. System nach einem der vorhergehenden Ansprüche, **dadurch gekennzeichnet, dass** die Eingabeaufforderung eine insbesondere graphische Anzeige mehrerer in der Datenbank hinterlegter Ventils und/oder entsprechender Bauteildaten umfasst, wobei mittels der Eingabeeinheit (5) eines der angezeigten Ventils auswählbar ist und dadurch die dem ausgewählten Ventil zugeordneten Bauteildaten der Datenbank dem zu identifizierenden Ventil zuordenbar sind.

6. System nach einem der vorhergehenden Ansprüche, **dadurch gekennzeichnet, dass** in Reaktion auf die Eingabeaufforderung weitere Bilddaten des zu identifizierenden Ventils mittels der Kamera (2) aufnehmbar sind, insbesondere aus mehreren Blickrichtungen, wobei der daraufhin von dem Analysemittel durchgeführte Vergleich mit Vergleichsdaten der Datenbank die zusätzlich erfassten Bilddaten berücksichtigt.

7. System nach einem der vorhergehenden Ansprüche, **dadurch gekennzeichnet, dass** ein Bildverarbeitungsmittel vorgesehen ist, welches dazu ausgelegt ist, die erfassten Bilddaten von der Aufnahmevorrichtung (1) zu erhalten und anhand der Merkmale der Bilddaten mindestens einen bauteilbezogenen Messwert, bei dem es sich insbesondere um eine Nennweite, eine Flanschnorm oder eine sonstige Abmessung des zu identifizierenden Ventils handelt, automatisch zu bestimmen, wobei das Analysemittel dazu ausgelegt ist, diesen mindestens einen Messwert zu erhalten und bei dem Vergleich der erfassten Bilddaten mit Vergleichsdaten der Datenbank zu berücksichtigen.

8. System nach einem der vorhergehenden Ansprüche, **dadurch gekennzeichnet, dass** die Aufnahmevorrichtung (1) mindestens einen Sensor (3, 4), insbesondere Druck-, Magnet- und/oder Temperatursensor, aufweist, mittels welchem mindestens ein Betriebsparameter des zu identifizierenden Ventils erfassbar ist, wobei das Visualisierungsmittel dazu ausgelegt ist, Informationen betreffend den mindestens einen erfassten Betriebsparameter auf der Anzeigeeinheit (5) anzuzeigen und wobei der mindestens eine erfasste Betriebsparameter vorzugsweise in der Datenbank und/oder einer mit der Aufnahmevorrichtung (1) verbundenen Speichereinheit speicherbar ist.

9. System nach einem der vorhergehenden Ansprüche, **dadurch gekennzeichnet, dass** das Visualisierungsmittel dazu ausgelegt ist, bei einer erfolgreichen eindeutigen Identifikation des Ventils mindestens ein Ersatzteil dieses Ventils und/oder der Einzelkomponenten dieses Ventils, insbesondere eine Ersatzteilliste, auf der Anzeigeeinheit (5) anzuzeigen, wobei mittels der Eingabeeinheit (5) ein angezeigtes Ersatzteil und eine Stückzahl auswählbar sind und wobei das System dazu ausgelegt ist, Daten betreffend das ausgewählte Ersatzteil und die Stückzahl an einen externen Rechner, insbesondere eine Anbieterdatenbank, zu übermitteln.

10. System nach einem der vorhergehenden Ansprüche, **dadurch gekennzeichnet, dass** das System dazu ausgelegt ist, falls eine eindeutige Identifikation des Ventils auch bei einem erneuten Vergleich mit Vergleichsdaten der Datenbank unter Berücksichtigung der in Reaktion auf die Eingabeaufforderung eingegebenen Eingabedaten und/oder zusätzlich erfassten Bilddaten fehlschlägt, die Eingabedaten und/oder erfassten Bilddaten an einen externen Rechner zu übermitteln und Identifikationsinformationen betreffend das zu identifizierende Ventil von dem externen Rechner zu empfangen, wobei das System vorzugsweise ferner dazu ausgelegt ist, im Falle einer daraufhin erfolgreichen eindeutigen Identifikation des Ventils die Bilddaten und/oder Eingabedaten und/oder Identifikationsinformationen vollständig oder teilweise in der Datenbank zu speichern.

11. System nach einem der vorhergehenden Ansprüche, **dadurch gekennzeichnet, dass** die mobile Aufnahmevorrichtung (1) ein Mobiltelefon, insbesondere ein Smartphone, ist und/oder dass die Datenbank eine cloudbasierte Datenbank ist.

12. Verfahren zur Identifikation von fluidführenden Ventilen mittels des Systems nach einem der vorhergehenden Ansprüche, umfassend die folgenden Schritte:
• Erfassen von Bilddaten des zu identifizierenden Ventils mittels der Aufnahmevorrichtung (1);
• Vergleichen der erfassten Bilddaten mit Vergleichsdaten der Datenbank mittels des Analysemittels, um dem zu identifizierenden Ventil Bauteildaten der Datenbank zuzuordnen;
• im Falle einer erfolgreichen eindeutigen Identifikation des Ventils, Anzeigen der dem zu identifizierenden Ventil zugeordneten Bauteildaten oder eines Teils davon auf der Anzeigeeinheit (5) mittels des Visualisierungsmittels;
• im Falle einer fehlgeschlagenen eindeutigen Identifikation des Ventils, Anzeigen einer Eingabeaufforderung auf der Anzeigeeinheit (5) mittels des Visualisierungsmittels;
• in Reaktion auf die Eingabeaufforderung, Eingeben von Eingabedaten mittels der Eingabeeinheit (5) und/oder Erfassen zusätzlicher Bilddaten mittels der Aufnahmevorrichtung (1); und
• in Reaktion auf die Eingabe der Eingabedaten und/oder die Erfassung zusätzlicher Bilddaten, Zuordnen von Bauteildaten der Datenbank zu dem zu identifizierenden Ventil auf Grundlage der Eingabedaten und/oder Durchführen eines weiteren Vergleichs mit Vergleichsdaten der Datenbank auf Grundlage der zusätzlichen Bilddaten, um dem zu identifizierenden Ventil Bauteildaten der Datenbank zuzuordnen,
wobei bei oder nach dem Erfassen von Bilddaten die von der Kamera (2) erfassten Bilddaten auf der Anzeigeeinheit (5) dargestellt und ein oder mehrere charakteristische Punkte und/oder Bereiche der angezeigten Bilddaten des zu identifizierenden Ventils über die Eingabeeinheit (5) definiert, benannt und/oder ausgewählt werden, wobei das Analysemittel diese Eingabedaten bei dem Vergleich der erfassten Bilddaten mit Vergleichsdaten der Datenbank berücksichtigt,
**dadurch gekennzeichnet, dass** es sich bei den charakteristischen Punkten und/oder Bereichen um eine mittlere Achse des Ventils und/oder eine manuelle Benennung eines Handrads, Antriebs oder Flansches des Ventils durch den Bediener handelt.

13. Verfahren nach Anspruch 12, **dadurch gekennzeichnet, dass** die erfassten Bilddaten von einem Bildverarbeitungsmittel verarbeitet werden, wobei anhand der Merkmale der Bilddaten mindestens ein bauteilbezogener Messwert, bei dem es sich insbesondere um eine Nennweite, eine Flanschnorm oder eine sonstige Abmessung des zu identifizierenden Ventils handelt, automatisch bestimmt wird, wobei das Analysemittel diesen mindestens einen Messwert bei dem Vergleich der erfassten Bilddaten mit Vergleichsdaten der Datenbank berücksichtigt.

## Claims

1. System for the identification of fluid-carrying valves, comprising
a mobile recording device (1) with an input unit (5), a display unit (5) and a camera (2), wherein image data of the valve to be identified can be captured by means of the camera (2),
a database, in which component data for a multiplicity of fluid-carrying valves are stored, wherein the component data comprise information on the respective component type, comparison data characterizing the respective valve and preferably further information,
an analyzing means, which has access to the database and is designed so as to obtain the captured image data from the recording device (1) and carry out a comparison of the image data of the valve to be identified with comparison data of the database in order to assign a component type stored in the database to the valve to be identified and thereby clearly identify the unknown valve, and
a visualizing means, which is in connection with the display unit (5) and is designed so as to obtain data from the analyzing means and, when there is a successful clear identification of the valve, display the corresponding component data or part thereof on the display unit (5), wherein the visualizing means is also designed so as to display an input request on the display unit (5) when clear identification of the valve fails, wherein, in the event of a display of the input request, input data can be input by means of the input unit (5) and/or additional image data of the valve to be identified can be captured by means of the camera (2), wherein the analyzing means is designed so as to assign on the basis of these input data component data of the database to the valve to be identified and/or carry out on the basis of these additional image data a further comparison with comparison data of the database in order to assign component data of the database to the valve to be identified and
during or after the capturing of image data of the valve to be identified, the image data captured by the camera can be graphically displayed on the display unit (5) and one or more characteristic points and/or areas of the displayed image data of the valve to be identified can be defined, can be designated and/or can be selected by way of the input unit (5), wherein the analyzing means is designed so as to obtain these input data and take them into account in the comparison of the captured image data with comparison data of the database, **characterized in that** the characteristic points and/or areas concern a central axis of the valve and/or a manual designation of a handwheel, drive or flange of the valve by the operator.

2. System according to Claim 1, **characterized in that** the further information of the component data comprises information concerning individual parts of the valve, parts lists, manufacturer specifications, information on compatibility with other components and/or details of previous installations.

3. System according to Claim 1 or 2, **characterized in that** the comparison data characterize the typical overall form of the valve, the form and/or arrangement of one or more individual components of the valve and/or one or more individual features of the valve.

4. System according to one of the preceding claims, **characterized in that** the comparison data comprise type-plate information, component numbers, serial numbers or other externally visible information provided on the valves.

5. System according to one of the preceding claims, **characterized in that** the input request comprises an in particular graphic display of a number of valves stored in the database and/or corresponding component data, wherein, by means of the input unit (5), one of the displayed valves can be selected and the component data of the database that are assigned to the selected valve can thereby be assigned to the valve to be identified.

6. System according to one of the preceding claims, **characterized in that**, in response to the input request, further image data of the valve to be identified can be recorded by means of the camera (2), in particular from a number of viewing directions, wherein the comparison with comparison data of the database that is then carried out by the analyzing means takes into account the image data additionally captured.

7. System according to one of the preceding claims, **characterized in that** an image processing means is provided, designed so as to obtain the captured image data from the recording device (1) and automatically determine on the basis of the features of the image data at least one component-related measured value, which in particular concerns a nominal diameter, a flange standard or some other dimensioning of the valve to be identified, wherein the analyzing means is designed so as to obtain this at least one measured value and take it into account in the comparison of the captured image data with comparison data of the database.

8. System according to one of the preceding claims, **characterized in that** the recording device (1) has at least one sensor (3, 4), in particular a pressure, magnet and/or temperature sensor, by means of which at least one operating parameter of the valve to be identified can be captured, wherein the visualizing means is designed so as to display information concerning the at least one captured operating parameter on the display unit (5) and wherein the at least one captured operating parameter can preferably be stored in the database and/or a storage unit connected to the recording device (1).

9. System according to one of the preceding claims, **characterized in that** the visualizing means is designed so as, when there is a successful clear identification of the valve, to display at least one replacement part of this valve and/or of the individual components of this valve, in particular a replacement parts list, on the display unit (5), wherein, by means of the input unit (5), a displayed replacement part and/or an quantity can be selected and wherein the system is designed so as to transmit data concerning the selected replacement part and the quantity to an external computer, in particular a supplier's database.

10. System according to one of the preceding claims, **characterized in that** the system is designed so as, if a clear identification of the valve fails even in a renewed comparison with comparison data of the database while taking into account the input data input in response to the input request and/or additionally captured image data, to transmit the input data and/or captured image data to an external computer and receive identification information concerning the valve to be identified from the external computer, wherein the system is preferably also designed so as, in the event of a then successful clear identification of the valve, to store the image data and/or input data and/or identification information completely or partially in the database.

11. System according to one of the preceding claims, **characterized in that** the mobile recording device (1) is a mobile phone, in particular a smartphone, and/or **in that** the database is a cloud-based database.

12. Method for the identification of fluid-carrying valves by means of the system according to one of the preceding claims, comprising the following steps:
• capturing image data of the valve to be identified by means of the recording device (1);
• comparing the captured image data with comparison data of the database by means of the analyzing means in order to assign component data of the database to the valve to be identified;
• in the event of a successful clear identification of the valve, displaying the component data assigned to the valve to be identified or part thereof on the display unit (5) by means of the visualizing means;
• in the event of a failed clear identification of the valve, displaying an input request on the display unit (5) by means of the visualizing means;
• in response to the input request, inputting input data by means of the input unit (5) and/or capturing additional image data by means of the recording device (1); and
• in response to the input of the input data and/or the capturing of additional image data, assigning component data of the database to the valve to be identified on the basis of the input data and/or carrying out a further comparison with comparison data of the database on the basis of the additional image data in order to assign component data of the database to the valve to be identified,
wherein, during or after the capturing of image data, the image data captured by the camera (2) are displayed on the display unit (5) and one or more characteristic points and/or areas of the displayed image data of the valve to be identified are defined, designated and/or selected by way of the input unit (5), wherein the analyzing means takes these input data into account in the comparison of the captured image data with comparison data of the database, **characterized in that** the characteristic points and/or areas concern a central axis of the valve and/or a manual designation of a handwheel, drive or flange of the valve by the operator.

13. Method according to Claim 12, **characterized in that** the captured image data are processed by an image processing means, wherein, on the basis of the features of the image data, at least one component-related measured value, which in particular concerns a nominal diameter, a flange standard or some other dimensioning of the valve to be identified, is automatically determined, wherein the analyzing means takes this at least one measured value into account in the comparison of the captured image data with comparison data of the database.

## Revendications

1. Système permettant d'identifier des vannes de transport de fluide, comprenant
un dispositif d'acquisition mobile (1) comportant une unité d'entrée (5), une unité d'affichage (5) et une caméra (2), dans lequel des données d'image de la vanne à identifier peuvent être acquises au moyen de la caméra (2),
une base de données dans laquelle sont stockées des données de composants pour une pluralité de vannes de transport de fluide, les données de composants comprenant des informations relatives au type de composant respectif, des données de comparaison caractérisant la vanne respective et de préférence d'autres informations, un moyen d'analyse ayant accès à la base de données et conçu pour obtenir les données d'image acquises par le dispositif d'acquisition (1) et pour effectuer une comparaison des données d'image de la vanne à identifier avec des données de comparaison de la base de données, afin d'associer un type de composant stocké dans la base de données à la vanne à identifier et ainsi identifier de manière unique la vanne inconnue, et
un moyen de visualisation qui est relié à l'unité d'affichage (5) et est conçu pour obtenir des données à partir du moyen d'analyse et, en cas de réussite de l'identification unique de la vanne, pour afficher les données de composants correspondantes ou une partie de celles-ci sur l'unité d'affichage (5), le moyen de visualisation étant en outre conçu, en cas d'échec de l'identification unique de la vanne, pour afficher une demande d'entrée sur l'unité d'affichage (5),
dans lequel, dans le cas d'un affichage de la demande d'entrée, des données d'entrée peuvent être fournies en entrée au moyen de l'unité d'entrée (5) et/ou des données d'image supplémentaires de la vanne à identifier peuvent être acquises au moyen de la caméra (2),
dans lequel le moyen d'analyse est conçu pour associer des données de composants de la base de données à la vanne à identifier sur la base de ces données d'entrée et/ou pour effectuer une comparaison supplémentaire avec des données de comparaison de la base de données sur la base de ces données d'image supplémentaires afin d'associer des données de composants de la base de données à la vanne à identifier, et
pendant ou après l'acquisition de données d'image de la vanne à identifier, les données d'image acquises par la caméra peuvent être représentées graphiquement sur l'unité d'affichage (5) et un ou plusieurs points et/ou zones caractéristiques des données d'image affichées de la vanne à identifier peuvent être définis, désignés et/ou sélectionnés par l'intermédiaire de l'unité d'entrée (5). dans lequel le moyen d'analyse est conçu pour obtenir ces données d'entrée et pour en tenir compte lors de la comparaison des données d'image acquises avec des données de comparaison de la base de données, **caractérisé en ce que** les points et/ou zones caractéristiques sont un axe central de la vanne et/ou une désignation manuelle d'un volant, d'un entraînement ou d'une bride de la vanne par l'opérateur.

2. Système selon la revendication 1, **caractérisé en ce que** les autres informations relatives aux données de composants comprennent des informations relatives à des parties individuelles de la vanne, des listes de pièces, des informations relatives au fabricant, des informations relatives à la compatibilité avec d'autres composants et/ou des informations relatives à des montages antérieurs.

3. Système selon la revendication 1 ou 2, **caractérisé en ce que** les données de comparaison caractérisent la forme générale typique de la vanne, la forme et/ou la disposition d'un ou plusieurs composants individuels de la vanne et/ou une ou plusieurs caractéristiques individuelles de la vanne.

4. Système selon l'une quelconque des revendications précédentes, **caractérisé en ce que** les données de comparaison comprennent des informations de plaque d'identification, des numéros de composants, des numéros de série ou d'autres informations qui sont apposées sur les vannes de manière visible de l'extérieur.

5. Système selon l'une quelconque des revendications précédentes, **caractérisé en ce que** la demande d'entrée comprend notamment un affichage graphique de plusieurs vannes mémorisées dans la base de données et/ou des données de composants correspondantes, l'une des vannes affichées pouvant être sélectionnée au moyen de l'unité d'entrée (5) et les données de composants de la base de données associées à la vanne sélectionnée pouvant ainsi être associées à la vanne à identifier.

6. Système selon l'une des revendications précédentes, **caractérisé en ce que**, en réponse à la demande d'entrée, d'autres données d'image de la vanne à identifier peuvent être acquises au moyen de la caméra (2), en particulier à partir de plusieurs directions d'observation, la comparaison effectuée ultérieurement par les moyens d'analyse avec des données de comparaison de la base de données tenant compte des données d'image acquises en supplément.

7. Système selon l'une quelconque des revendications précédentes, **caractérisé en ce qu'**il est prévu un moyen de traitement d'image qui est conçu pour obtenir les données d'image acquises par le dispositif d'acquisition (1) et, en fonction des caractéristiques des données d'image, au moins une valeur de mesure relative à un composant, qui est en particulier une largeur nominale, une forme de bord ou une autre dimension de la vanne à identifier, le moyen d'analyse étant conçu pour obtenir ladite au moins une valeur de mesure et pour en tenir compte lors de la comparaison des données d'image acquises avec des données de comparaison de la base de données.

8. Système selon l'une des revendications précédentes, **caractérisé en ce que** le dispositif de réception (1) présente au moins un capteur (3, 4), en particulier un capteur de pression, un capteur magnétique et/ou un capteur de température, au moyen de laquelle au moins un paramètre de fonctionnement de la vanne à identifier peut être détecté, le moyen de visualisation étant conçu pour afficher sur l'unité d'affichage (5) des informations relatives au paramètre de fonctionnement détecté, et le paramètre de fonctionnement détecté pouvant de préférence être mémorisé dans la base de données et/ou dans une unité de mémoire reliée à l'appareil à réceptacle (1).

9. Système selon l'une quelconque des revendications précédentes, **caractérisé en ce que** le moyen de visualisation est conçu pour afficher au moins une pièce de rechange de cette vanne et/ou des différents composants de cette vanne, en particulier une liste de pièces de rechange, sur l'unité d'affichage (5) en cas de réussite de l'identification unique de la vanne, une pièce de rechange affichée et un numéro de pièce pouvant être sélectionnés au moyen de l'unité d'entrée (5), et le système étant conçu pour transmettre des données relatives à la pièce de rechange sélectionnée et au numéro de pièce à un ordinateur externe, en particulier à une base de données de fournisseurs.

10. Système selon l'une quelconque des revendications précédentes, **caractérisé en ce que** le système est conçu, en cas d'échec de l'identification unique de la vanne, même en cas de nouvelle comparaison avec des données de comparaison de la base de données en tenant compte des données d'entrée fournies en entrée en réponse à la demande d'entrée et/ou des données d'image acquises en supplément, pour transmettre les données d'entrée et/ou les données d'image acquises à un ordinateur externe et recevoir de l'ordinateur externe des informations d'identification relatives à la vanne à identifier, le système étant en outre de préférence configuré, en cas de réussite de l'identification unique ultérieure de la vanne, pour stocker les données d'image et/ou les données d'entrée et/ou les informations d'identification en totalité ou en partie dans la base de données.

11. Système selon l'une quelconque des revendications précédentes, **caractérisé en ce que** le dispositif d'acquisition mobile (1) est un téléphone mobile, en particulier un smartphone, et/ou **en ce que** la base de données est une base de données en nuage.

12. Procédé d'identification de vannes de transport de fluide au moyen du système selon l'une quelconque des revendications précédentes, comprenant les étapes suivantes :
• acquérir des données d'image de la vanne à identifier au moyen du dispositif d'acquisition (1) ;
• comparer les données d'image acquises aux données de comparaison de la base de données au moyen du moyen d'analyse afin d'associer les données de composants de la base de données à la vanne à identifier ;
• en cas de réussite de l'identification unique de la vanne, afficher les données de composants associées à la vanne à identifier ou à une partie de celle-ci sur l'unité d'affichage (5) au moyen du moyen de visualisation ;
• en cas d'échec de l'identification unique de la vanne, afficher une demande d'entrée sur l'unité d'affichage (5) au moyen du moyen de visualisation ;
• en réponse à la demande d'entrée, fournir en entrée des données d'entrée au moyen de l'unité d'entrée (5) et/ou acquérir des données d'image supplémentaires au moyen du dispositif d'acquisition (1) ; et
• en réponse à la fourniture en entrée des données d'entrée et/ou à l'acquisition de données d'image supplémentaires, associer des données de composants de la base de données à la vanne à identifier sur la base des données d'entrée et/ou effectuer une autre comparaison avec des données de comparaison de la base de données sur la base des données d'image supplémentaires afin d'associer des données de composants de la base de données à la vanne à identifier,
dans lequel, pendant ou après l'acquisition de données d'image, les données d'image acquises par la caméra (2) sont représentées sur l'unité d'affichage (5) et un ou plusieurs points et/ou zones caractéristiques des données d'image affichées de la vanne à identifier sont définis, désignés et/ou sélectionnés par par l'intermédiaire de l'unité d'entrée (5), dans lequel le moyen d'analyse tient compte de ces données d'entrée lors de la comparaison des données d'image acquises avec des données de comparaison de la base de données, **caractérisé en ce que** les points et/ou zones caractéristiques sont un axe central de la vanne et/ou une désignation manuelle d'un volant, d'un entraînement ou d'une bride de la vanne par l'opérateur.

13. Procédé selon la revendication 12, **caractérisé en ce que** les données d'image acquises sont traitées par un dispositif de traitement d'image, dans lequel au moins une valeur de mesure relative aux composants, qui est en particulier une largeur nominale, une forme de bord ou une autre dimension de la vanne à identifier, est déterminée automatiquement à partir des caractéristiques des données d'image, le moyen d'analyse tenant compte de ladite au moins une valeur de mesure lors de la comparaison des données d'image acquises avec des données de comparaison de la base de données.
